# DEMANDE DE BREVET EUROPEEN

(11) **EP 1 238 848 A1**
(43) Date de publication de la demande: **11.09.2002**
(21) Numéro de dépôt: 02290512.9
(22) Date de dépôt: 01.03.2002
(51) Int. Cl.: B60K 31/00, B60T 7/22

(54) **Procédé de décélération assistée d'un véhicule automobile**

(30) Priorité: 08.03.2001 FR 0103169
(71) Demandeur: Renault s.a.s., 92100 Boulogne Billancourt (FR)
(72) Inventeur: Chabanon, Christian, 27700 Tosny (FR); Priez, Alain, 91190 Gif sur Yvette (FR); Thumerel, Francois, 78000 Versailles (FR)

(57) **Abrégé**

L'invention est un procédé de décélération assistée d'un véhicule automobile équipé au moins d'un capteur de l'environnement avant du véhicule, d'un calculateur électronique de régulation de distance, d'un organe pilotable de freinage, d'un organe pilotable de contrôle du moteur et d'une interface homme-machine,tel que :
- par la mise en route volontaire du conducteur,
- en l'absence de toute action du conducteur sur l'accélération ou le freinage du véhicule,
- en présence d'un obstacle détecté,
il consiste à appliquer au moteur une consigne de couple de décélération inférieure au couple résistant du frein moteur et déterminée en fonction de l'obstacle détecté, avec contrôle simultané de la distance par rapport audit obstacle, jusqu'à ce que la distance entre le véhicule et l'obstacle soit égale à la distance de suivi.

## Description

La présente invention concerne un procédé de décélération assistée d'un véhicule automobile équipé d'un système de régulation automatique de distance et de vitesse.

Les systèmes actuels de régulation de distances de type ACC - Adaptative Cruise Control - permettent de maintenir automatiquement une distance de sécurité avec le véhicule précédent, lorsqu'ils ont été activés volontairement par le conducteur, au moyen d'un bouton par exemple. Au-dessus d'une vitesse minimale de l'ordre de 40 km/h environ, le conducteur peut sélectionner une vitesse de croisière à laquelle va se stabiliser le véhicule par gestion automatique de l'accélération longitudinale du véhicule en fonction de la distance et de la vitesse du véhicule détecté devant lui. La position et la vitesse des véhicules précédant le véhicule régulé sont obtenues grâce à des moyens de détection de type radar par exemple. Les informations sont traitées par un calculateur électronique qui commande l'ouverture du papillon d'admission d'air ou l'injection de carburant pour un moteur Diesel, la boîte de vitesse et le système de freinage, dans le but de contrôler l'accélération et donc la vitesse pour adapter la distance par rapport au véhicule précédent. Une interface dédiée permet de renseigner le conducteur à tout instant sur l'état du système. Un tel système de régulation ACC est décrit dans le brevet français déposé sous le numéro 95 04155 au nom de RENAULT. Un inconvénient de ce type de système vient du fait qu'il prend en compte un mode suspendu pour permettre au conducteur d'effectuer des manoeuvres de dépassement en accélérant au-delà de la vitesse de consigne, et que le contrôle en distance est désactivé durant cet état suspendu considéré comme transitoire et de courte durée. Pendant cette suspension, la régulation en distance n'est plus assurée car le conducteur prend la main sur le système et demande plus d'accélération que le système ACC, au travers par exemple de la pédale d'accélérateur. La détection d'obstacle est toujours active. Lorsqu'il relâche la pédale d'accélérateur, le mode suspendu est arrêté et la régulation de distance est réactivée. Un inconvénient d'un véhicule automobile équipé d'un système de régulation automatique de distance vient du fait que la détection d'obstacle n'est utilisée que dans des systèmes automatiques enclenchés par le conducteur. En dehors du fonctionnement de ces systèmes, le conducteur ne bénéficie pas des informations de la détection d'obstacle pour assurer une distance de sécurité minimale pendant les faibles décélérations en conduite normale.

Il existe également des systèmes de freinage assisté, utilisant un capteur d'environnement de type radar ou lidar par exemple, pour détecter les obstacles et connaître leur distance et leur vitesse relatives par rapport au véhicule assisté. Un tel système est décrit dans la demande de brevet français, déposée sous le numéro 97 13087 au nom de RENAULT. Il aide le conducteur s'il freine insuffisamment derrière un obstacle pour éviter une collision. En l'absence d'obstacle détecté, le système d'assistance du freinage fonctionne comme une aide au freinage d'urgence lors de la détection d'un enfoncement très rapide de la pédale de frein.

Un tel système intervient donc quand le conducteur freine insuffisamment, avec ou sans détection d'obstacle, mais pas lors des phases de décélération moteur quand le conducteur cesse d'accélérer. Or, la décélération moteur disponible au lever de pied est relativement faible car comprise entre -0,5 et -1,5 m/s², et elle n'a pas la même valeur sur tous les groupes moto-propulseurs, donc tous les véhicules, en raison des différents types de moteur, essence ou Diesel, et de boîtes de vitesse, automatique ou manuelle.

Le but de l'invention est de pallier ces inconvénients en proposant un procédé de décélération assistée avec contrôle de la distance entre le véhicule assisté et un obstacle détecté circulant devant lui, de façon à éviter tout risque de collision.

Pour cela, l'objet de l'invention est un procédé de décélération assistée d'un véhicule automobile équipé au moins d'un capteur de l'environnement avant du véhicule, d'un calculateur électronique de régulation de distance, d'un organe pilotable de freinage, d'un organe pilotable de contrôle du moteur et d'une interface homme-machine, caractérisé en ce que :
- par la mise en route volontaire du conducteur,
- en l'absence de toute action du conducteur sur l'accélération ou le freinage du véhicule,
- en présence d'un obstacle détecté,
il consiste à appliquer au moteur une consigne de couple de décélération inférieure au couple résistant du frein moteur et déterminée en fonction de l'obstacle détecté, avec contrôle simultané de la distance par rapport audit obstacle, jusqu'à ce que la distance entre le véhicule et l'obstacle soit égale à la distance de suivi.

D'autres caractéristiques et avantages de l'invention apparaîtront à la lecture de la description de deux modes de réalisation, illustrée par les figures suivantes qui sont :
- la figure 1 : un schéma fonctionnel d'un système de mise en oeuvre du procédé de décélération assistée selon l'invention ;
- les figures 2 et 3 : les organigrammes de deux variantes du procédé de décélération assistée selon l'invention.
- la figure 4 : un exemple d'algorithme de régulation du couple de décélération du moteur.

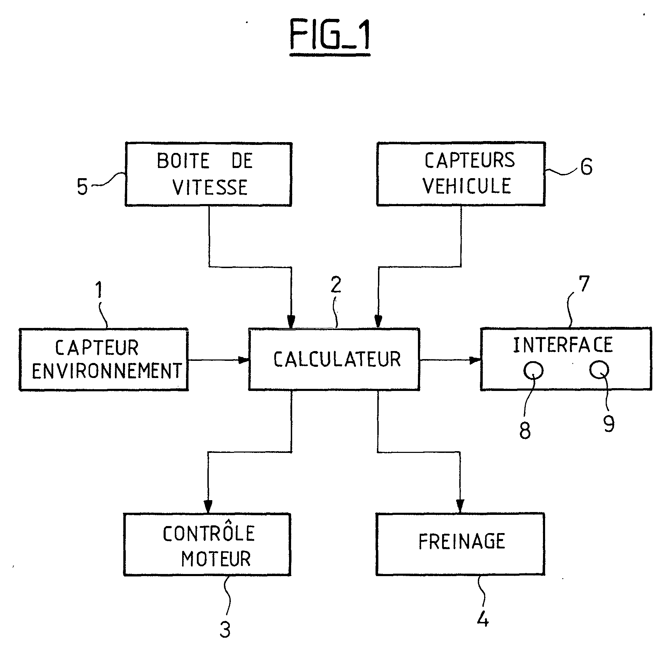

Le procédé selon l'invention permet de gérer la décélération d'un véhicule en contrôlant sa distance à une cible détectée devant lui. Pour cela, le véhicule comprend, comme le montre schématiquement la figure 1, un capteur 1 de l'environnement situé à l'avant du véhicule, de type radar, lidar, caméra, moyen de navigation ou autres. Il comprend également un calculateur électronique 2 de régulation de distance, destiné à piloter un organe 3 de contrôle du moteur et un organe 4 de freinage du véhicule. Le calculateur 2 de régulation reçoit, en plus des informations sur l'environnement, des informations sur le véhicule de la part de la boîte de vitesse 5, et de capteurs 6 de la dynamique du véhicule comme la vitesse par exemple. Le véhicule est doté d'une interface 7 homme-machine avec des moyens d'activation du procédé de décélération assistée, tels qu'un bouton 8 que doit enfoncer le conducteur, et des moyens d'alarme 9 sonore ou visuelle pour prévenir le conducteur des risques de collision.

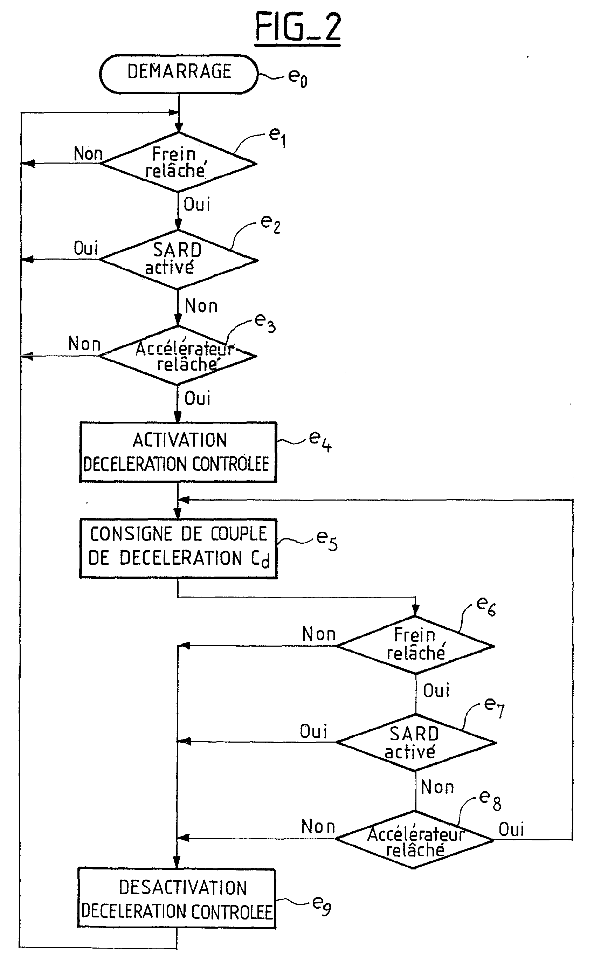

L'organigramme de la figure 2 décrit les différentes étapes du procédé selon l'invention, dans le cas d'un véhicule en train de rouler, donc de vitesse instantanée non nulle, et équipé d'un système automatique de régulation de la distance SARD. De plus, cet organigramme correspond au cas où le conducteur n'agit ni sur l'accélération ni sur le freinage du véhicule et qu'il met en route volontairement le procédé de décélération assistée avec contrôle en distance, par exemple au moyen d'un bouton sur la planche de bord.

Ainsi, il comporte une première étape e₀ de démarrage, qui suppose que le véhicule a une vitesse instantanée supérieure à un seuil, par exemple égale à 3 km/h.

A l'étape e₁, le calculateur électronique 2 de régulation de la décélération du véhicule vérifie si le conducteur agit sur les freins, par exemple s'il a totalement relâché la pédale de freins.

Si tel est le cas, il vérifie à l'étape suivante e₂ si le système automatique de régulation de distance SARD est activé ou non. Tant qu'il est activé, le procédé selon l'invention ne va pas plus loin.

Si le système SARD est inactif, le calculateur 2 vérifie si le conducteur agit sur l'accélération du véhicule, en particulier s'il appuie sur la pédale d'accélérateur, à l'étape e₃. Si le conducteur n'accélère pas du tout, en relâchant notamment totalement la pédale d'accélérateur, le véhicule est alors en phase de décélération avec le frein moteur disponible.

Lorsque ces trois conditions sont remplies, le procédé de décélération assistée avec contrôle en distance est activé à l'étape e₄ et l'application d'une consigne de couple de décélération C_{d}, inférieure au couple résistant du frein moteur, est appliquée à l'étape e₅ à condition qu'une cible ou un obstacle soit détecté. Cette consigne de couple permet d'obtenir une consigne de décélération qui est supérieure à la décélération du frein moteur.

Pendant l'assistance à la décélération, le calculateur 2 vérifie, à l'étape e₆, que le conducteur ne freine pas, notamment en n'enfonçant pas la pédale de frein, par l'intermédiaire d'interrupteurs placés sous la pédale par exemple.

Si le conducteur freine, le mode de décélération assistée avec contrôle en distance est désactivé à l'étape e₉ et le conducteur reprend le contrôle du véhicule dans la phase de décélération.

Par contre si le conducteur ne freine pas à l'étape e₆, le calculateur électronique vérifie à l'étape e₇ s'il a activé volontairement ou non le système de régulation de distance SARD.

Si le système SARD est activé, la décélération assistée avec contrôle en distance est désactivée à l'étape e₉ et l'accélération du véhicule est alors gérée par ce système SARD.

Par contre, en l'absence de freinage conducteur et sans activation du système SARD, le calculateur va ensuite, à l'étape e₈, constater l'action volontaire du conducteur sur l'accélération du véhicule. En particulier, il va vérifier si le conducteur appuie sur la pédale d'accélérateur, au moyen d'informations délivrées par des interrupteurs placés sous la pédale.

Si l'accélérateur est totalement relâché, le mode de décélération assistée se poursuit car le conducteur n'agit ni sur le freinage ni sur l'accélération.

Par contre, s'il accélère, le procédé passe à l'étape e₉ de désactivation du mode d'assistance à la décélération avec contrôle en distance et aucune consigne de couple de décélération C_{d}, décrit à l'étape e₅, n'est envoyée à l'organe de freinage.

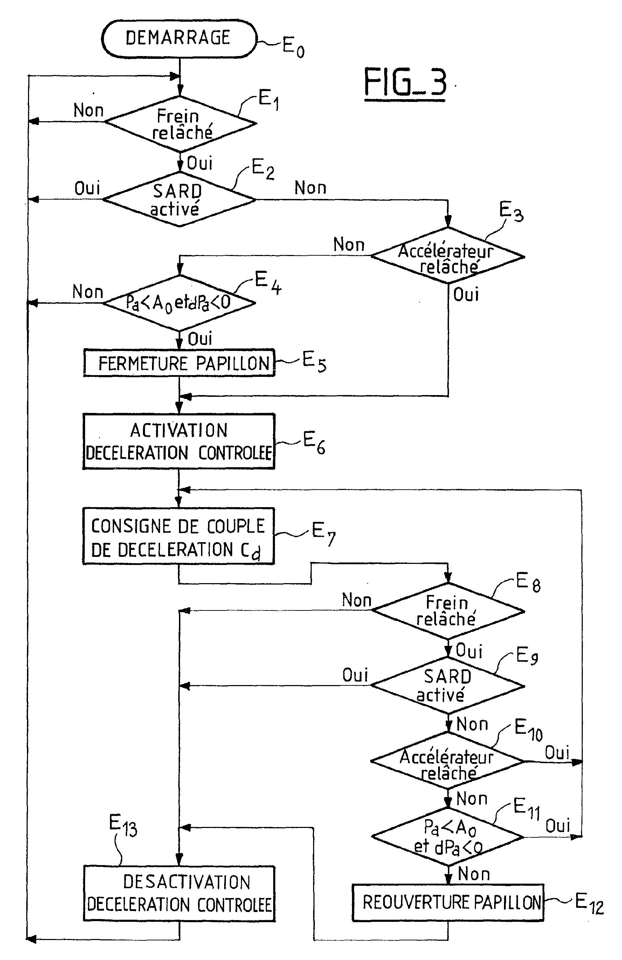

L'organigramme de la figure 3 décrit les différentes étapes d'une variante du procédé de décélération assistée selon l'invention.

La première étape E₀ de démarrage considère la vitesse instantanée du véhicule qui doit être supérieure à un seuil, comme mentionné précédemment. Le procédé est déclenché quand le conducteur relâche la pédale d'accélérateur et que le véhicule ralentit.

A l'étape suivante E₁, le calculateur électronique 2 de régulation de la décélération vérifie si le conducteur agit sur les freins volontairement.

Si les freins sont totalement relâchés, le calculateur vérifie ensuite à l'étape E₂ si le système de régulation de distance SARD, dont est équipé le véhicule, est activé ou non.

S'il ne l'est pas, le calculateur 2 vérifie les actions du conducteur sur l'accélération, à l'étape E₃.

Si la pédale d'accélérateur n'est pas totalement relevée, le calculateur vérifie, à l'étape E₄, d'une part le fait que le conducteur relâche progressivement la pédale, et d'autre part que le véhicule décélère grâce au frein moteur. Pour cela, le calculateur 2 détermine la dérivée dPₐ de la position de la pédale d'accélérateur, qui doit être négative, et mesure la position instantanée Pₐ de cette pédale qui doit être inférieure à la position Pₒ maintenant le véhicule à vitesse constante.

Le relâchement partiel et progressif de la pédale d'accélérateur peut également être analysé par l'accélération du véhicule et par sa dérivée, le jerk, qui doivent être tous les deux négatifs.

Si effectivement le véhicule est en décélération par le frein moteur avec la pédale d'accélérateur partiellement relevée, le procédé commande une étape E₅ de fermeture du papillon d'air du moteur, par l'organe de contrôle moteur. Cette fermeture ne doit pas être brutale pour garder un certain confort en décélération, tout en étant rapide.

Le procédé se poursuit par une étape E₆ d'activation de la décélération assistée avec contrôle en distance.

Si à l'étape E₃, le conducteur n'agit pas du tout sur l'accélération du véhicule, en particulier en relâchant totalement la pédale, le procédé aboutit à l'étape E₆ d'activation de la décélération assistée car le véhicule décélère uniquement par le frein moteur.

Ce procédé de décélération étant activé, il consiste à appliquer une consigne C_{d} de couple de décélération inférieure au couple résistant du frein moteur, à l'étape E₇.

Pendant cette décélération assistée, le calculateur 2 vérifie à l'étape E₈ si les freins sont totalement relâchés. Si le conducteur freine, alors le procédé se termine par l'étape E₁₃ de désactivation de cette décélération, le conducteur reprenant le contrôle du véhicule dans la phase de décélération.

Par contre, si les freins sont relâchés, le calculateur 2 vérifie, à l'étape E₉, que le système de régulation de distance SARD est désactivé ou non. S'il est activé, le procédé se termine par l'étape E₁₃.

Si le système SARD n'est pas activé, le calculateur 2 vérifie le relâchement total de l'accélérateur du véhicule, à l'étape E₁₀. Dans le cas où le conducteur n'accélère pas du tout, la décélération assistée continue, mais si le conducteur a le pied sur la pédale, le calculateur à l'étape E₁₁ vérifie qu'il décélère par relâchement progressif et partiel de la pédale d'accélérateur. Pour cela, il détermine par exemple la dérivée dPₐ de la position de la pédale d'accélérateur qui doit être négative et mesure la position Pₐ de cette pédale, comme cela a été décrit pour l'étape E₄. Si effectivement, le véhicule décélère avec le frein moteur, le mode de décélération assistée continue.

Sinon, le procédé commande la réouverture du papillon d'admission d'air à l'étape E₁₂ et le procédé se termine à l'étape E₁₃ de désactivation, car le conducteur a soit activé le système de régulation de distance SARD, soit agit sur les freins ou l'accélération du véhicule.

Pour les véhicules non équipés d'un système SARD, il suffit de supprimer les blocs concernant ce système dans les organigrammes des figures 2 et 3.

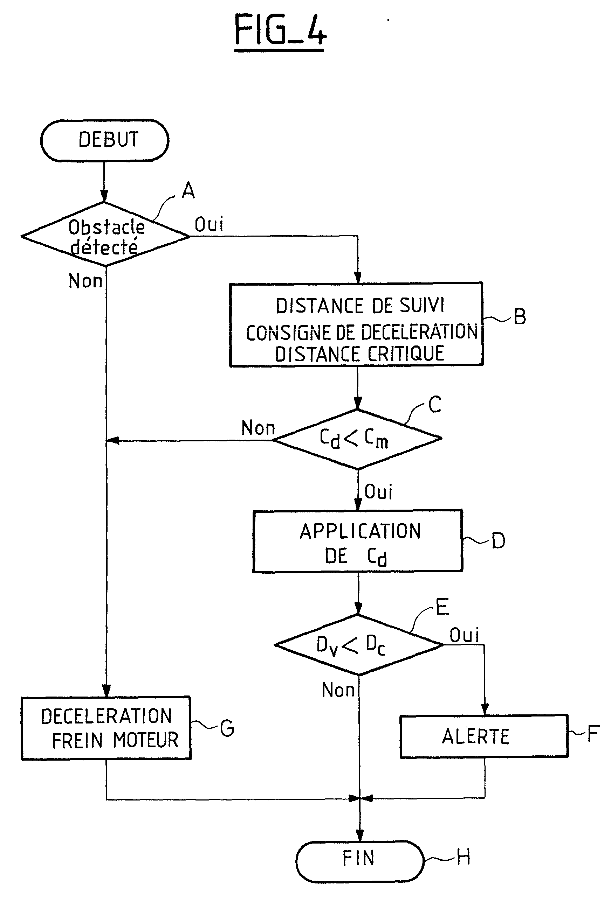

La figure 4 est un exemple d'algorithme de régulation du couple de décélération du moteur autour d'une consigne déterminée, supérieure au couple résistant du frein moteur.

Lorsque la décélération assistée avec contrôle de la distance a été activée dans les deux cas précédemment décrits de décélération du véhicule, avec relâchement partiel ou total de l'accélération, ce procédé selon l'invention comporte une étape A de détection d'obstacle situé à l'avant du véhicule, au moyen par exemple du capteur de détection de l'environnement.

Si aucun obstacle n'est détecté, le procédé passe à l'étape G de maintien de la décélération due au frein moteur, aucune consigne de décélération n'étant calculée et appliquée puisque la décélération causée par le couple résistant du moteur est suffisante car il n'y a aucune cible devant le véhicule.

Par contre, si un obstacle est détecté devant le véhicule à l'étape A, le procédé effectue une étape B de calculs, en particulier de la consigne de couple de décélération C_{d}. Pour déterminer cette consigne, le calculateur électronique calcule tout d'abord la distance de suivi Dₛ qui correspond à la distance de consigne D_{c}, fonction du temps de poursuite Tₚ, de la vitesse absolue de la cible détectée V_{ci} et de la distance minimale Dₘᵢₙ correspondant à une cible arrêtée. Cette distance de suivi est pondérée par les conditions de trafic routier et par le style de conduite du conducteur à assister.

Le calculateur détermine ensuite la consigne de couple de décélération C_{d} en fonction de la vitesse relative de la cible, ainsi que de sa distance relative par rapport au véhicule, et de la distance de suivi Dₛ calculée. Cette consigne de couple de décélération C_{d} est limitée à une valeur minimale en deçà de laquelle le conducteur doit reprendre le contrôle du véhicule. Il calcule de plus une distance critique D_{c} entre le véhicule et l'obstacle, définie en fonction de la distance de suivi Dₛ comme étant minimale pour assurer la sécurité du véhicule si le conducteur n'a pas encore repris le contrôle du véhicule dans la phase de décélération.

A l'étape suivante C, le calculateur 2 compare la valeur de la consigne de décélération C_{d} calculée précédemment au couple résistant moteur Cₘ. Si cette valeur négative est supérieure au frein moteur, il n'est pas nécessaire de l'appliquer et le procédé se poursuit alors par l'étape G déjà mentionnée, puisque la décélération due au frein moteur est suffisante pour garantir la distance de suivi Dₛ.

Si la décélération de consigne est au contraire inférieure au couple Cₘ résistant, cette consigne est effectivement appliquée et envoyée à l'organe de contrôle moteur et aux freins pour que le véhicule décélère jusqu'à respecter la distance de suivi Dₛ (étape D).

Pendant cette décélération assistée, la distance Dᵥ entre le véhicule ainsi régulé et la cible détectée est contrôlée. Pour rendre la décélération assistée confortable, une incursion dans la distance de suivi est autorisée. De ce fait, la distance Dᵥ est comparée à la distance critique D_{c}, lors de l'étape E, pour des raisons de sécurité.

Si cette distance est inférieure à la distance critique, le conducteur est alerté à l'étape F, par une alarme sonore ou visuelle, pour qu'il reprenne en main le freinage ou l'accélération de son véhicule dont la distance à l'obstacle devient critique. Dans ce cas, le procédé aboutit soit à l'étape e₆, soit à l'étape E₈ des deux algorithmes décrits dans les figures 2 et 3 respectives, qui aboutissent à la désactivation de la décélération assistée dès que le conducteur freine volontairement.

Au contraire, si la distance du véhicule par rapport à la cible est supérieure à la distance critique, la décélération assistée avec contrôle en distance gère correctement la distance et elle n'induit aucun danger pour la sécurité du véhicule et du conducteur.

Le procédé, qui permet d'informer le conducteur, par le biais d'un voyant lumineux au tableau de bord ou d'une alarme sonore, que la distance de son véhicule par rapport à la cible est trop courte pour assurer sa sécurité, prévoit par exemple que l'alarme se déclenche pour une intrusion égale à 60% de la distance de suivi et qui correspond à la distance critique, calculée pour un temps de suivi de 1 seconde. Cette alarme intermittente, telle un clignotement, peut devenir continue si l'intrusion passe à 80%.

Le procédé de décélération assistée avec contrôle en distance selon l'invention, activé volontairement par le conducteur qui manifeste de plus son intention de décélérer en relâchant partiellement ou totalement la pédale d'accélérateur, s'opère jusqu'à atteindre la distance de suivi, le plus rapidement possible et de façon confortable, avec éventuellement l'action des freins. Au delà du seuil calculé, la décélération moteur habituelle, sans assistance, est appliquée.

Grâce à ce procédé, le conducteur appuie seulement sur la pédale d'accélérateur pour gérer l'accélération de son véhicule et la décélération est gérée par la régulation de distance si un véhicule plus lent ou une cible, telle une courbe, est détecté devant le véhicule. Dans des situations conduisant à un freinage important, voire urgent, l'invention permet un gain perceptible en distance d'arrêt pendant que le conducteur transfert son pied de la pédale d'accélérateur à la pédale de frein. En effet, le procédé positionne l'enfoncement de la pédale de frein de façon optimale, ce qui supprime une course morte ou un temps mort pour accroître l'efficacité du freinage quand le conducteur freine volontairement. Il supprime également un retour d'effort parasite ou de course inutile sur la pédale de frein.

Selon une caractéristique supplémentaire, le procédé de décélération assistée selon l'invention comprend une limitation du freinage automatique aux freinages de confort, inférieurs à - 3 m/s² dans le cadre des systèmes de régulation de distance de type ACC qui sont des systèmes destinés à assurer le confort du conducteur. Pour les freinages plus importants, c'est le conducteur qui décide soit de continuer à freiner en actionnant volontairement la pédale de frein, soit d'effectuer une manoeuvre de dépassement en fonction de l'infrastructure routière et des conditions de trafic. Le conducteur est informé que la limite du freinage automatique est atteint et qu'il doit reprendre lui-même le contrôle de son véhicule. Cette fonction existant déjà sur les systèmes de régulation de distance de type ACC, elle permet de garder une certaine cohérence avec les systèmes du type alarme anti-collision indiquant au conducteur un danger potentiel nécessitant un freinage plus important.

## Revendications

1. Procédé de décélération assistée d'un véhicule automobile, équipé d'au moins un capteur d'environnement avant du véhicule, d'un calculateur électronique de régulation de distance, d'un organe pilotable de freinage d'un organe pilotable de contrôle du moteur et d'une interface homme-machine, **caractérisé en ce que** :
- par la mise en route volontaire du conducteur ;
- en l'absence de toute action du conducteur sur l'accélération ou le freinage du véhicule ;
- en présence d'un obstacle détecté ;
il consiste à appliquer une consigne de couple de décélération inférieure au couple résistant du frein moteur et déterminée en fonction de l'obstacle détecté, avec contrôle simultané de la distance par rapport audit obstacle, jusqu'à ce que la distance (Dᵥ) entre le véhicule et l'obstacle soit égale à la distance de suivi (Dₛ).

2. Procédé de décélération assistée selon la revendication 1, **caractérisé en ce que**, un obstacle étant détecté devant le véhicule, il comprend :
- une étape (B) de :
. calcul de la distance de suivi (Dₛ), fonction du temps de poursuite, de la vitesse absolue de la cible détectée et de la distance minimale correspondant à une cible arrêtée, et pondérée par les conditions de trafic routier et par le style de conduite du conducteur du véhicule régulé ;
. calcul de la consigne de couple de décélération (C_{d}) en fonction de la vitesse et de la distance relatives de l'obstacle détecté, ainsi que de ladite distance de suivi ;
. calcul d'une distance critique (D_{c}) entre le véhicule et l'obstacle, définie en fonction de la distance de suivi (Dₛ) calculée et minimale pour assurer la sécurité du véhicule en situation d'accélération volontaire du conducteur ;
- une étape (C) de comparaison de la consigne de couple de décélération (C_{d}) calculée avec le couple résistant moteur (Cₘ) ;
- une étape (D) d'application, aux organes de contrôle moteur et de freinage, de la consigne de couple de décélération (C_{d}) si sa valeur est inférieure au couple résistant moteur (Cₘ) ;
- une étape (E) de comparaison de la distance (Dᵥ) entre le véhicule et l'obstacle avec la distance critique (D_{c}), avec alerte au conducteur si cette distance est inférieure à la valeur critique.

3. Procédé de décélération assistée selon l'une des revendications 1 ou 2, **caractérisé en ce que**, dans le cas d'un véhicule équipé d'un système automatique de régulation de distance SARD, il comporte les étapes suivantes :
- e₀) démarrage, à condition que la vitesse instantanée du véhicule soit supérieure à un seuil minimal ;
- e₁) vérification du relâchement total des freins.;
- e₂) vérification de la désactivation du système de régulation automatique de distance ;
- e₃) vérification du relâchement total de l'accélérateur ;
- e₄) activation de la décélération assistée si les freins et l'accélérateur sont relâchés et le système SARD désactivé ;
- e₅) application d'une consigne de couple de décélération du moteur calculée en fonction d'un obstacle détecté devant le véhicule avec contrôle de la distance par rapport audit obstacle ;
- e₆) vérification du relâchement des freins ;
- e₇) vérification de la désactivation du système SARD ;
- e₈) vérification du relâchement de l'accélérateur ;
- e₉) désactivation de la décélération assistée du véhicule en cas de non-respect d'une des trois conditions e₆) à e₈) précédentes et annulation de la consigne de couple de décélération.

4. Procédé de décélération assistée selon l'une des revendications 1 ou 2, **caractérisé en ce que**, dans le cas d'un véhicule équipé d'un système automatique de régulation de distance SARD, il comporte les étapes suivantes :
- E₀) démarrage à condition que la vitesse instantanée du véhicule soit supérieure à un seuil minimal :
- E₁) vérification du relâchement total des freins ;
- E2) vérification de la désactivation du système SARD ;
- E₃) vérification de l'état de relâchement de l'accélérateur ;
- E₄) analyse de l'accélération du véhicule et de sa dérivée en cas de relâchement partiel de l'accélérateur ;
- E₅) fermeture du papillon d'admission d'air du moteur en cas de décélération du véhicule par relâchement partiel de l'accélérateur ;
- E₆) activation de la décélération assistée quand la décélération du véhicule est due uniquement au frein moteur par relâchement total de l'accélérateur ;
- E₇) application d'une consigne de couple de décélération du moteur calculée en fonction d'un obstacle détecté devant le véhicule avec contrôle de la distance par rapport audit obstacle ;
- E₈) vérification du relâchement des freins ;
- E₉) vérification de la désactivation du système SARD ;
- E₁₀) vérification de l'état de relâchement de l'accélérateur ;
- E₁₁) analyse de l'accélération du véhicule et de sa dérivée en cas de relâchement partiel de l'accélérateur ;
- E₁₂) réouverture du papillon d'admission d'air en cas d'enfoncement de l'accélérateur ;
- E₁₃) désactivation de la décélération assistée en cas de freinage, d'accélération ou d'activation du système SARD volontaires de la part du conducteur et annulation de la consigne de couple de décélération.

5. Procédé de décélération assistée selon la revendication 2, **caractérisé en ce que**, dans le cas où la distance (Dᵥ) entre le véhicule régulé et l'obstacle détecté est inférieure à la distance de suivi (Dₛ), une alarme intermittente se déclenche si la différence entre les deux vitesses est comprise entre 60 % et 80 %, et une alarme continue se déclenche si cette différence est supérieure à 80 %.
